# EUROPEAN PATENT SPECIFICATION

(11) **EP 4 033 432 B1**
(45) Date of publication and mention of the grant of the patent: **21.08.2024**
(21) Application number: 22152279.0
(22) Date of filing: 19.01.2022
(51) Int. Cl.: G06N 3/045, G06F 16/93, G06Q 10/10

(54) **PROCEDURE FOR MANAGING AND UPDATING REGULATORY DIGITAL TEXTUAL DOCUMENTS**
PROZEDUR FÜR DAS VERWALTEN UND AKTUALISIEREN DIGITALER REGELWERK-TEXTE.
PROCÉDURE DE GESTION ET DE MISE À JOUR DES DOCUMENTS TEXTUELS NUMERIQUE RÉGLEMENTAIRES

(30) Priority: 22.01.2021 IT 202100001133
(43) Date of publication of application: 27.07.2022
(73) Proprietor: Aptus.Ai S.r.l., 56122 Pisa (IT)
(72) Inventor: DE MATTEI, Lorenzo, 56122 PISA (IT); MAZZA, Gabriele, 23823 COLICO (IT); TESEI, Andrea, 04100 LATINA (IT)
(74) Representative: Lunati & Mazzoni S.r.L.

(56) References cited:
- WO-A1-2011/035389
- CIFUENTES-SILVA FRANCISCO ET AL: "Legislative Document Content Extraction Based on Semantic Web Technologies", 25 May 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 558 - 573, ISBN: 978-3-319-10403-4, XP047514221
- KOLAWOLE JOHN ADEBAYO: "MULTIMODAL LEGAL INFORMATION RETRIEVAL", 27 April 2018 (2018-04-27), XP055741019, Retrieved from the Internet <URL:https://orbilu.uni.lu/bitstream/10993/36614/1/Adebayo-Kolawole-Lux-thesis.pdf> [retrieved on 20201016]
- MARIOS KONIARIS ET AL: "Towards Automatic Structuring and Semantic Indexing of Legal Documents", INFORMATICS, ACM, 2 PENN PLAZA, SUITE 701 NEW YORK NY 10121-0701 USA, 10 November 2016 (2016-11-10), pages 1 - 6, XP058316095, ISBN: 978-1-4503-4789-1, DOI: 10.1145/3003733.3003801

## Description

The present invention relates to a procedure or autonomous system for managing and updating regulatory digital textual documents of the type specified in the preamble to the first claim.

In particular, the present invention relates to a process, and related system, for managing and updating regulatory documents, e.g. as defined by the European Banking Authority (EBA) and the European Commission (EC), intended for the financial world and part of the solutions classified as Reg Tech.

As is known, the financial sector is a world of great fluidity and variability. In detail, at least part of this variability is determined by the continuous changes in the reference regulations governing the same sector and the need to conform or adapt the structure of the company or institution to these regulations.

In order to undertake compliance operations, it is necessary to consult the sources of publication of new regulations and compare them with the regulations already applied in the institution. These operations are carried out by trained staff who essentially carry out operations of research of regulatory texts, analysis of regulatory texts, contextualisation of the same within the pre-existing regulatory framework and proposal of changes within the company or institution.

The known technique described therefore includes some important drawbacks.

In particular, conformation operations are very costly both in terms of time and money.

Indeed, it is no coincidence that, as Duff and Phelps state in "Global Regulatory Outlook 2019*",* the percentage of revenue investment spent by banking institutions was 4% in 2017 and is growing strongly. It is assumed, in this respect, that the percentage of investment for compliance with current regulations could even reach 10% in 2023.

These numbers underline the enormous, and by no means negligible, transaction costs involved in bringing the institution's regulatory framework into line with up-to-date international and national regulations.

The following documents are relevant prior art: CIFUENTES-SILVA FRANCISCO ET AL: "Legislative Document Content Extraction Based on Semantic Web Technologies"(2019-05-25), Kolawole John Adebayo: "MULTIMODAL LEGAL INFORMATION RETRIEVAL"(2018-04-27), WO2011/035389A1, and MARIOS KONIARIS ET AL: "Towards Automatic Structuring and Semantic indexing of Legal Documents" (2016-11-10),DOI: 10.1145/3003733.3003801.

In this situation, the technical task at the basis of the present invention is to devise a process and autonomous system for managing and updating regulatory digital textual documents capable of substantially obviating at least part of the aforementioned drawbacks.

In the context of the aforementioned technical task, it is an important aim of the invention to obtain a procedure and autonomous system for managing and updating regulatory digital textual documents which makes it possible to considerably reduce the time and economic costs arising from the adaptation of the company structure to changes in normative references.

Another important aim of the invention is to realise a process and autonomous system for managing and updating reliable, accurate, fast and accessible multi-user regulatory digital textual documents.

In conclusion, a further task of the invention is to realise a process, and a related system, which enables the reduction of operational risks arising from compliance activities, providing the possibility to facilitate the exploitation of new business opportunities, e.g. new products, with less time as well as to control the adaptation of current products to regulatory updates.

The technical task and the specified purposes are achieved by a process and autonomous system for managing and updating regulatory digital textual documents as claimed in the attached claims 1, 8, 9, 10.

Preferred technical solutions are highlighted in the dependent claims.

The features and advantages of the invention are hereinafter clarified by a detailed description of preferred embodiments of the invention, with reference to the accompanying drawings, in which:
the **Fig. 1** shows a first functional diagram of a process and autonomous system for managing and updating regulatory digital textual documents according to the invention; and
the **Fig. 2** shows a second functional diagram of a process and autonomous system for managing and updating regulatory digital textual documents according to the invention in which normative area tagger and statistics calculator functions are added.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

The management and updating process is configured to process regulatory digital textual documents.

Such documents may be digitised normative texts, e.g. present on the web, i.e. within the internet environment. In particular, regulatory digital textual documents may include regulations from e.g. the European Official Journal, EU Case Law, EU Opinions, the Italian Official Journal, the European Banking Authority (EBA) and the European Commission (EC), intended for the financial world and part of solutions classified as Reg Tech.

Each document defines a textual structure including at least one or more textual portions, one or more reference parameters and one or more metadata.

Textual portions are nothing more than the excerpts of text that define the standard or part of it. Usually, a single textual portion corresponds to a single norm, but different ways of discretisation can be implemented.

The reference parameters are the elements that make it possible to identify and contextualise the textual portion. Thus, for example, they can be defined at least by an article and/or a paragraph. The titles referring to the textual portion can also be included among the reference parameters.

The metadata are preferably references to other textual portions, possibly even parts of the textual portion. Therefore, metadata may include secondary referencing parameters that refer to other standards and that, in essence, refer back to the standard whose textual portion includes beforementioned metadata.

The procedure may include an acquisition phase.

In the acquisition phase, a plurality of different documents is acquired from an external database. The external database, as already partly anticipated, may include documents available on an Internet network. Therefore, the external database may be included in one or more servers, possibly even in a Cloud environment, accessible via the Internet. Or, more trivially, the external database may be included within a local physical storage medium.

The procedure may include an extraction phase. In the extraction phase, substantially the text portions, the reference parameters and the metadata are extracted from each of the text structures. Furthermore, in this phase, preferably the textual portions, the reference parameters and the metadata are mapped according to standards for encoding regulatory data such as Akoma Ntoso or others.

This phase is essentially preparatory to the subsequent phases of analysis and prepares each textual structure.

In particular, an application example of an extraction model may be that in the extraction phase documents are represented in the form of a sequence of images, i.e. pages. For each page, a classifier based on convolutional neural networks is used to identify the relevant portions of text and their sequentiality. The classifier also recognises non-relevant portions of text to be discarded, such as headers, footers, indexes, page numbers, etc., and footnotes that can later be treated separately, and can therefore be placed at the end of the document. Advantageously, the procedure may include a recognition phase.

In the recognition phase, each textual structure is recognised through a first logic implementing an artificial intelligence based on a supervised or zero-shot machine learning approach.

The artificial intelligence based on zero-shot automatic learning, or zero-shot learning, can be substantially configured to learn to recognize new concepts having at its disposal a simple description of them. From this it follows that the model of artificial intelligence of this kind can be able to foresee parameters of reference and/or metadata never used in the normal training phases, essentially allowing the same intelligence to recognize also new textual structures which could arise in the future.

In particular, an applicative example of a recognition model may foresee that, once a sequence of text portions with their associated textual content has been obtained, a graphic realisation is transposed, e.g. an image frame containing the text portions, and some typographic characteristics such as font, font size, font weight or other.

The procedure may include an enforcement phase.

In the execution phase, a multimodal analysis of the text structure is carried out by means of the first logic.

In detail, this phase is carried out by labelling each of the textual portions, the reference parameters and the metadata to validate the extraction phase. Basically, the execution phase corresponds to a verification phase of what was extracted in the extraction phase, which advantageously increases the accuracy of the procedure in its entirety.

More in detail, in the execution phase, the artificial intelligence can approach the task as a semantic segmentation task, which recognises the textual structure of the document by treating it as an image and performing the page segmentation by considering the text feature to enable the multimodal analysis determined by text and image analysis.

Furthermore, in order to improve the performance of the artificial intelligence, in the execution phase it can be envisaged to analyse the text and perform sentence level tagging on the text, for instance considering text and html, to validate the information extracted in the previous step and increase, as already mentioned, the accuracy of the procedure.

The procedure may include an identification phase.

In the identification phase, the reference parameters and/or metadata are essentially identified or recognised by a second logic implementing an artificial intelligence.

The second logic can be configured to produce a digital representation that conforms to a predefined representational scheme such as that of the Akoma Ntoso specification or another standard for encoding normative texts.

As is well known, the Akoma Ntoso standard and other standards for encoding normative texts and other representative schemes are defined so that regulatory references are represented using International Resource Identifiers (IRIs) to provide a way of referring to a universally shared resource that is invariant with respect to time, computer systems or software versions. Usually, these representational schemes distinguish two different IRIs: Documentary IRI used for document identification; non-documentary IRI used for identifying part of the or portion of text of said standard. Advantageously, the use of the Akoma Ntoso standard, or another standard for encoding normative texts, allows normative references to be disambiguated according to the versions of the documents under analysis.

The identification phase also preferably includes an identification sub-phase and a segmentation sub-phase.

These sub-phases are preferably implemented by means of a well-defined second logic. In detail, advantageously, the second logic implements an artificial intelligence model based on recurrent neural networks, also bidirectional, or on Transformer, or on manual engineering of features.

Thus, the detection sub-phase preferably involves detecting the presence of a reference parameter and/or metadata in each of the textual portions by means of a word-level sequence classifier based on appropriately bidirectional recurrent neural networks, Transformer, or manual engineering of the features.

The segmentation sub-phase preferably involves segmenting each of the benchmarks and metadata through a sequential labelling activity performed by one of a classifier based on appropriately bi-directional recurrent neural networks, Transformer, manual engineering of the features.

Basically, therefore, in the identification phase the sequence of texts recognised as images is preferably transformed into a tree structure. This tree structure can basically represent the structure of the document, divided into chapters, sections, articles or other.

More in detail, the transformation into a tree structure occurs at least thanks to a first classifier, implemented in the detection sub-phase, which decides when a part of the text starts as a new chapter, a new section, a new article, and a second classifier, implemented in the fragmentation sub-phase, which decides when a part of the text is considered closed and, therefore, ends a chapter, a section or other.

For example, the first classifier may be based on a Random Forest or Supported Vector Machine classification algorithm, and is preferably configured to take as entry, or input, manually engineered features such as the presence of certain formulas or patterns expressed via regular expression, stylographic information (length of parts of text, lexical richness, or other) and typographic features.

Even alternatively, the first classifier may be based on a hand-defined grammar or on machine learning techniques and is preferably configured to take as entry, or input, manually engineered features such as the typical structure of legal documents, the sequence of opening tags as predicted by the first classifier and typographical features.

The process includes, in addition, an indexing phase.

In the indexing phase, preferably, the textual portions are indexed. In particular, they are indexed by associating to each textual portion a respective reference parameter and/or a respective metadata by creating a plurality of indexed texts.

The texts indexed in this way are useful texts that can be organised in a management system.

The procedure may preferably also include a registration phase.

In the registration phase, each indexed text is registered in an internal database accessible by at least one user.

The internal database can, of course, be included in an internet environment, e.g. within a cloud system, and can be included in one or more servers.

Or, the internal database can be recorded on a local physical medium.

The procedure may include a liaison phase.

In the linking phase, preferably, each of the indexed texts is logically linked in relation to specific characteristics.

In detail, indexed texts whose reference parameters and/or metadata are mutually correlated are advantageous. The correlation can be one of coincidence, or of dependency, between indexed texts. For example, an article or a paragraph referred to in one indexed text may be referred to in another indexed text and, for this reason, these indexed texts may be linked to each other. In particular, thanks to the use of the Akoma Ntoso standard, or another standard for encoding normative texts, normative links between the various versions of documents can be disambiguated on the basis of certain metadata such as date of publication, date of entry into force or other.

The indexed texts are, therefore, linked together, according to the described logic, within the database in such a way that, when the user consults an indexed text, the same user can directly access each other indexed text related to it.

The process may include additional advantageous features.

In fact, the process may include a representation phase.

In the representation phase, the indexed texts are represented in the internal database in a digital document that can be consulted by the user.

Such document may be a simple list of standards and titles accessed via hypertext links. Or, advantageously, the digital document may include hyperlinks organised in a graph structure.

The graph structure, therefore, includes vertices corresponding to each of the indexed texts and connecting lines between the related indexed texts.

Such a representation has the advantage of allowing the user to get an overview of the current legislation, while at the same time making it possible to adequately and efficiently go into all aspects of individual regulations and the regulations, or parts of regulations, linked to them.

In addition, the procedure may include a monitoring phase.

In the monitoring phase, the external database is monitored with a predetermined time frequency. This means that the process may involve performing certain actions at a frequency of, for example, daily or weekly or monthly or whatever.

Preferably, monitoring is configured to check whether scanned documents have been modified and/or additional documents have been added.

Thus, in the monitoring phase, the autonomous system can be configured to carry out a further capture phase if documents have been modified and/or additional documents have been added.

Thus, the process may comprise a forwarding phase. In the forwarding phase, the system preferably forwards a warning signal to the user each time the further acquisition phase is carried out.

This means that the process according to the invention allows the user to be warned of any updates related to the regulations.

The invention also introduces a new autonomous system for managing and updating regulatory digital textual documents.

The system substantially comprising means for implementing the process according to the invention as described above.

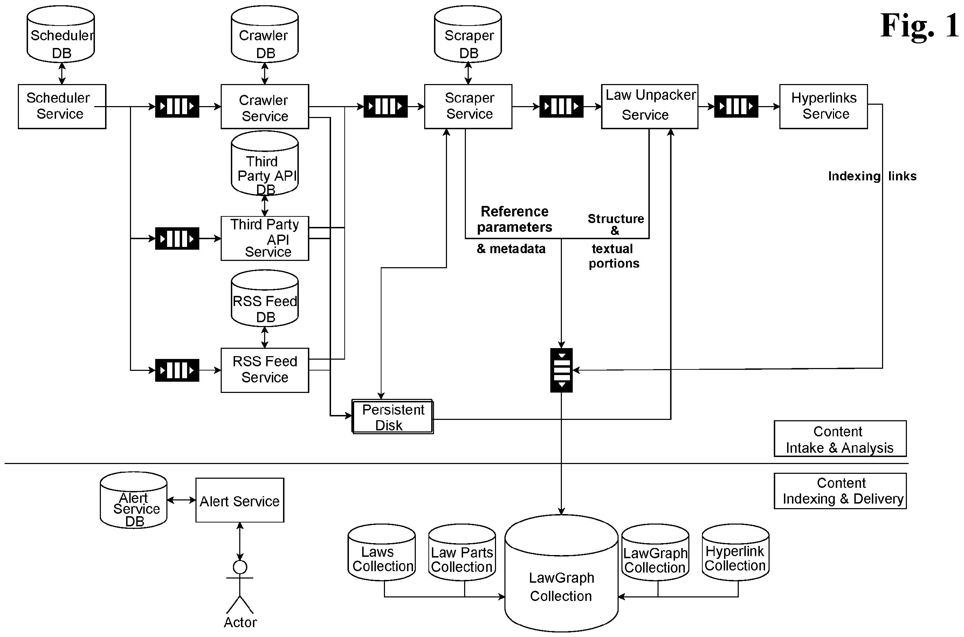

An initial example of the architecture of such a system is shown in Fig. 1.

The implementation example essentially describes a system including a set of *content intake* & analysis microservices responsible for collecting incoming regulations from available and supported European regulatory sources and their analysis through artificial intelligence logic *analysis,* of microservices responsible for the collection of incoming regulations from available and supported European regulatory sources as well as their analysis through artificial intelligence logics.

The content intake set has a scheduler service, or *scheduler service,* which is fully configurable to start periodically according to the update frequency of each specific normative source and also supports RSS feed resources with an RSS *feed service,* or *RSS feed service.* The *crawler service, or crawler service,* and the scraper service, or *scraper service,* are responsible for extracting the reference parameters, metadata and textual portions from the collected regulations, which are then analysed by first logic, determined by *AI LawUnpacker,* and second logic, determined by *AI ReferenceExtractor,* just before the indexing and registration phase. The Law Reference Service also implements hyperlink matching logic, which consists of recognising the correct legislation referred to in a specific regulation, e.g. correct legislation, correct and valid version in force or other, just before storing this link or link in the internal database so that the end user can browse the legislation interactively.

The content indexing and distribution set, or *content indexing & delivery,* is responsible for indexing the results of textual structure extraction and normative references carried out by artificial intelligence logic. The content indexing and delivery set is equipped with instances of the internal database and the associated index. The content indexing and distribution set is equipped with the instances of the internal database and the associated index, which make up the registration system that allows the end user to efficiently access the archived standards, i.e. the indexed texts, as well as allowing the scalability of the entire system according to the workload. To complete the distribution of content, or content delivery, the alert service is implemented to ensure that the end user can customise their preferred alerts, e.g. receive an email every time there is a new regulatory update, for example for one or more regulations of interest, or for a specific portion of the regulations available in the system.

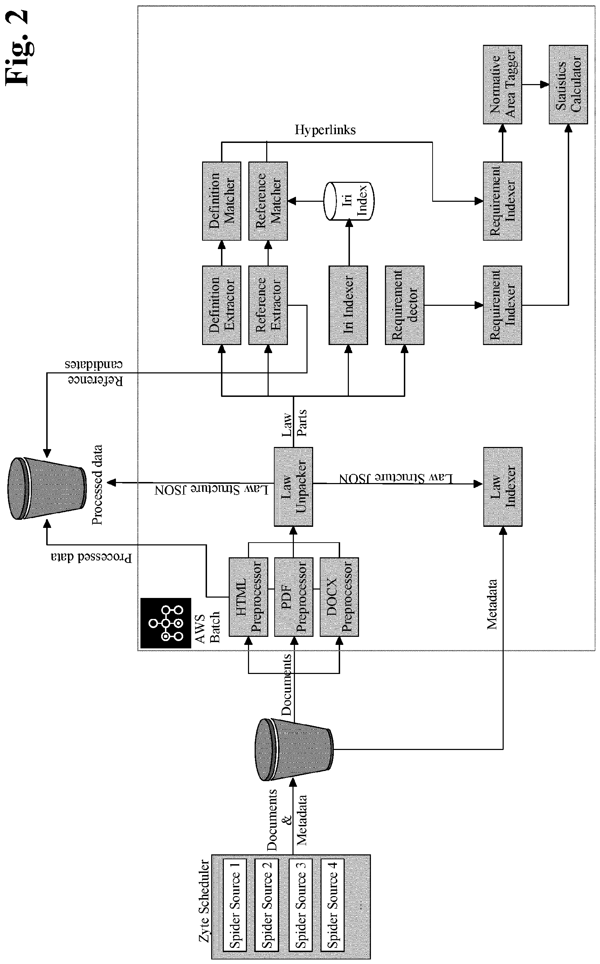

A second example of the implementation architecture of such a system is shown in Fig. 2.

In this example, some functionalities are substantially added to the procedure. The latter, following the indexing phase, can further provide for a labelling of the normative area, or normative area tagging, and a statistical calculation based on one or more parameters of the sequences of normative texts, or statistics calculator. The invention may comprise a computer program comprising instructions which, when the program is executed by the computer, enable the computer to perform the process according to the invention.

Naturally, such a programme is preferably part of the system described above.

In conclusion, the invention may comprise a computer readable storage medium comprising instructions which, when executed by the computer, enable the computer to perform the process according to the invention.

The storage medium may include, for example, the internal database.

The process, and associated autonomous system, of managing and updating regulatory digital textual documents according to the invention achieves important advantages.

In fact, the procedure and its system make it possible to considerably reduce the time and economic costs involved in adapting the company's structure to changes in regulatory references.

The process and said system are very reliable, accurate, fast and provide accessible consultation tools for multiple users.

The procedure and system also make it possible to obtain a set of linked regulatory texts which, taken together, define a complete machine readable regulation.

In conclusion, the process and its system reduce the operational risks arising from compliance activities, providing the possibility to facilitate the exploitation of new business opportunities, e.g. new products, with less time as well as controlling the adaptation of current products to regulatory updates.

The invention is susceptible to variations within the scope of the inventive concept defined by the claims. Within this scope, all details are substitutable by equivalent elements and the materials, shapes and dimensions can be any.

## Claims

1. Computer-implemented procedure for managing and updating regulatory digital textual documents,
- said documents each defining a textual structure including at least one or more textual portions, one or more reference parameters defined by at least one article and/or a paragraph, and one or more metadata,
- said procedure comprising:
- acquiring a plurality of different said documents from at least one external database,
- extracting said textual portions, said reference parameters and said metadata from each of said textual structures,
- recognizing each said textual structure through a first logic implementing an artificial intelligence based on a supervised or zero-shot type learning approach,
- performing a multimodal analysis of said textual structure, by means of said first logic, labeling each of said textual portions, said reference parameters and said metadata to validate said extraction phase,
- identifying said reference parameters and/or said metadata through a second logic implementing an artificial intelligence to produce a digital representation conforming to the Akoma Ntoso specifications or other standard for encoding normative texts,
- indexing said textual portions by associating each said textual portion with a respective said reference parameter and/or a respective said metadata realizing a plurality of indexed texts,
- separately recording each said indexed text in an internal database accessible by at least one user,
- logically connecting each said indexed text whose said reference parameters and/or metadata are mutually correlated within said database in such a way that, when said user consults said indexed text, said user can directly access each other said indexed text correlated to it,
and **characterized by** further comprising
- monitoring said external database with a predetermined time frequency so as to verify at least if said acquired documents have been modified and to carry out a further acquisition phase if said documents have been modified.

2. Procedure according to claim 1, wherein said second logic implements an artificial intelligence model based on a neural network with long-term bidirectional memory (Bi-LSTM) enabled with a conditional causal field model and an artificial intelligence model including a Transformer neural network, and said identification phase comprises the sub-phases of:
- detecting the presence of a said reference parameter and/or a said metadata in each of said textual portions through said neural network with long-term bidirectional memory (Bi-LSTM),
- segmenting each of said reference parameters and said metadata through a sequential labelling activity carried out by at least one between
- a classifier of word-level sequences based on recurrent neural networks on Transformer, or on manual engineering of the features accompanied by an output normalization tool;
- a classifier based on recurrent neural networks, on Transformer or on manual engineering of the features;
- an IRI pattern generator based on recurrent neural networks or Transformer

3. Procedure according to any one of the preceding claims, comprising representing said indexed texts in said internal database within a digital document that can be consulted by said user.

4. Procedure according to the previous claims, wherein said digital document includes hyperlinks organized in a graph structure including vertices corresponding to each of said indexed texts and connecting lines between said indexed related texts.

5. Procedure according to any one of the preceding claims, wherein said monitoring phase further comprises verifying also if further said documents have been added said further acquisition phase is carried out further said documents have been added.

6. Procedure according to any one of the preceding claims, comprising forwarding a warning signal to said user each time said further acquisition phase is performed.

7. Procedure according to any one of the preceding claims, wherein said external database includes said documents available on an internet network.

8. Autonomous system for the management and updating of normative digital textual documents comprising means implementing a procedure according to any one of the preceding claims.

9. Computer program comprising instructions that, when the program is executed by a computer, enable the computer to perform a procedure according to any one of claims 1-7.

10. Computer readable storage support comprising instructions that, when executed by a computer, enable said computer to perform a procedure according to any one of claims 1-7.

## Patentansprüche

1. Computerimplementiertes Verfahren zum Management und zur Aktualisierung von digitalen regulatorischen Textdokumenten,
- wobei jedes dieser Dokumente eine Textstruktur definiert, die mindestens einen oder mehrere Textabschnitte, einen oder mehrere Referenzparameter, die durch mindestens einen Artikel und/oder einen Paragraph definiert sind, und eine oder mehrere Metadaten umfasst,
- wobei das Verfahren umfasst:
- Erfassen einer Mehrzahl verschiedener Dokumente aus mindestens einer externen Datenbank,
- Extrahieren der Textabschnitte, der Referenzparameter und der Metadaten aus jeder der Textstrukturen,
- Erkennen jeder Textstruktur durch eine erste Logik, die eine künstliche Intelligenz basierend auf einem überwachten oder Zero-Shot-Lernenansatz implementiert,
- Durchführen einer multimodalen Analyse der Textstruktur durch die erste Logik, Klassifizieren jedes der Textabschnitte, der Referenzparameter und der Metadaten zum Bestätigen der Extraktionsphase,
- Identifizieren der Referenzparameter und/oder der Metadaten durch eine zweite Logik, die eine künstliche Intelligenz implementiert, um eine digitale Darstellung zu erzeugen, die den Akoma-Ntoso-Spezifikationen oder einem anderen Standard zur Kodierung normativer Texte entspricht,
- Indizieren der Textabschnitte durch Zuordnen jedes Textabschnitts mit einem entsprechenden Referenzparameter und/oder einem entsprechenden der Metadaten, wodurch eine Mehrzahl indizierter Texte erstellt wird,
- Aufzeichnen jedes indizierten Textes getrennt in einer internen Datenbank, die für mindestens einen Benutzer zugänglich ist,
- Verbinden logisch jedes indizierten Textes, deren genannten Referenzparameter und/oder Metadaten innerhalb der Datenbank miteinander korreliert sind, sodass, wenn der Benutzer den indizierten Text konsultiert, kann der Benutzer direkt zu jedem anderen damit korrelierten indizierten Text Zutritt haben,
und **dadurch gekennzeichnet ist, dass** es ferner umfasst:
- Überwachen der externen Datenbank mit einer vorbestimmten Zeitfrequenz, um mindestens zu überprüfen, ob die erfassten Dokumente geändert wurden, und um eine weitere Erfassungsphase durchzuführen, wenn die genannten Dokumente geändert wurden.,

2. Verfahren nach Anspruch 1, wobei die zweite Logik ein künstliches Intelligenzmodell basierend auf einem neuronalen Netz mit bidirektionalem Langzeitgedächtnis (Bi-LSTM) implementiert, die mit einem bedingten Kausalmodell aktiviert wird, und ein künstliches Intelligenzmodell umfassend ein neuronales Transformer Netz, und wobei die Identifizierungsphase die Unterphasen umfasst:
- Feststellen des Vorhandenseins eines Referenzparameters und/oder eines der Metadaten in jedem Textabschnitt durch das neuronale Netz mit bidirektionalem Langzeitgedächtnis (Bi-LSTM),
- Segmentieren jedes Referenzparameters und jedes der Metadaten durch eine sequenzielle Klassifizierungsaktivität, die durch mindestens einen der folgenden durchgeführt wird:
- einen Klassifikator von Wortebene-Sequenzen basierend auf rekurrenten neuronalen Netzen auf Transformer oder auf manuelle Entwicklung der Merkmale, die einem Ausgabenormalisierungstool zugeordnet ist;
- einen Klassifikator basierend auf rekurrenten neuronalen Netzen, auf Transformer oder auf manuelle Entwicklung der Merkmale;
- einen IRI-Mustergenerator basierend auf rekurrenten neuronalen Netzen oder Transformer.

3. Verfahren nach einem der vorhergehenden Ansprüche, umfassend Darstellen der indizierten Texte in der internen Datenbank innerhalb eines digitalen Dokuments, das von dem Benutzer konsultiert werden kann.

4. Verfahren nach den vorhergehenden Ansprüchen, wobei das digitale Dokument Hyperlinks umfasst, die in einer Graphstruktur organisiert sind, die Knoten, die jedem der indizierten Texte entsprechen, und Verbindungslinien zwischen den zusammenhängenden indizierten Texten enthält.

5. Verfahren nach einem der vorhergehenden Ansprüche, wobei die Überwachungsphase ferner umfasst, Überprüfen auch, wenn weitere Dokumente hinzugefügt wurden, wird die weitere Erfassungsphase durchgeführt, weitere Dokumente hinzugefügt wurden.

6. Verfahren nach einem der vorhergehenden Ansprüche, umfassend das Weiterleiten eines Warnsignals an den Benutzer, jedes Mal die weitere Erfassungsphase durchgeführt wird.

7. Verfahren nach einem der vorhergehenden Ansprüche, wobei die externe Datenbank Dokumente umfasst, die in einem Internetnetzwerk verfügbar sind.

8. Autonomes System zum Management und zur Aktualisierung von digitalen Normen-Textdokumenten umfassend Mittel zur Implementierung eines Verfahrens nach einem der vorhergehenden Ansprüche.

9. Computerprogramm umfassend Anweisungen, die, wenn das Programm von einem Computer durchgeführt wird, den Computer veranlassen, ein Verfahren nach einem der Ansprüche 1 bis 7 durchzuführen.

10. Computerlesbares Speichermedium umfassend Anweisungen, die, wenn sie von einem Computer durchgeführt werden, den Computer veranlassen, ein Verfahren nach einem der Ansprüche 1 bis 7 durchzuführen

## Revendications

1. Procédure mise en oeuvre par ordinateur pour la gestion et la mise à jour de documents textuels numériques réglementaires,
- dits documents définissant chacun une structure textuelle comprenant au moins une ou plusieurs portions textuelles, un ou plusieurs paramètres de référence définis par au moins un article et/ou un paragraphe, et une ou plusieurs métadonnées,
- ladite procédure comprenant :
- l'acquisition d'une pluralité de dits documents différents à partir d'au moins une base de données externe,
- l'extraction desdites portions textuelles, desdits paramètres de référence et desdites métadonnées de chacune desdites structures textuelles,
- la reconnaissance de chacune desdites structures textuelles par une première logique implémentant une intelligence artificielle basée sur une approche d'apprentissage supervisée ou de type zéro-shot,
- la réalisation d'une analyse multimodale de ladite structure textuelle, au moyen de ladite première logique, en étiquetant chacune desdites portions textuelles, desdits paramètres de référence et desdites métadonnées pour valider ladite phase d'extraction,
- l'identification desdits paramètres de référence et/ou desdites métadonnées par une deuxième logique implémentant une intelligence artificielle pour produire une représentation numérique conforme aux spécifications Akoma Ntoso ou à une autre norme d'encodage des textes normatifs,
- l'indexation desdites portions textuelles en associant chacune desdites portions textuelles avec un dit paramètre de référence respectif et/ou une dite métadonnée respective réalisant une pluralité de textes indexés,
- l'enregistrement séparé de chacun desdits textes indexés dans une base de données interne accessible par au moins un utilisateur,
- la connexion logique de chacun desdits textes indexés dont lesdits paramètres de référence et/ou métadonnées sont mutuellement corrélés au sein de ladite base de données de telle sorte que, lorsque ledit utilisateur consulte ledit texte indexé, ledit utilisateur peut accéder directement à chacun desdits autres textes indexés corrélés à celui-ci,
et **caractérisée par le fait** de comprendre en outre :
- la surveillance de ladite base de données externe avec une fréquence de temps prédéterminée afin de vérifier au moins si lesdits documents acquis ont été modifiés et d'effectuer une nouvelle phase d'acquisition si lesdits documents ont été modifiés.

2. Procédure selon la revendication 1, dans laquelle ladite deuxième logique implémente un modèle d'intelligence artificielle basé sur un réseau de neurones à mémoire bidirectionnelle à long terme (Bi-LSTM) activé avec un modèle de champ causal conditionnel et un modèle d'intelligence artificielle incluant un réseau de neurones Transformer, et ladite phase d'identification comprend les sous-phases de :
- détection de la présence d'un dit paramètre de référence et/ou d'une dite métadonnée dans chacune desdites portions textuelles par ledit réseau de neurones à mémoire bidirectionnelle à long terme (Bi-LSTM),
- segmentation de chacun desdits paramètres de référence et desdites métadonnées par une activité d'étiquetage séquentiel réalisée par au moins un entre :
- un classificateur de séquences au niveau des mots basé sur des réseaux de neurones récurrents sur Transformer, ou sur une ingénierie manuelle des caractéristiques accompagnée d'un outil de normalisation de la sortie ;
- un classificateur basé sur des réseaux de neurones récurrents, sur Transformer ou sur une ingénierie manuelle des caractéristiques ;
- un générateur de modèles IRI basé sur des réseaux de neurones récurrents ou Transformer.

3. Procédure selon l'une quelconque des revendications précédentes, comprenant la représentation desdits textes indexés dans ladite base de données interne dans un document numérique consultable par ledit utilisateur.

4. Procédure selon les revendications précédentes, dans laquelle ledit document numérique comprend des hyperliens organisés dans une structure graphique comprenant des sommets correspondant à chacun desdits textes indexés et des lignes de connexion entre lesdits textes indexés connexes.

5. Procédure selon l'une quelconque des revendications précédentes, dans laquelle ladite phase de surveillance comprend en outre la vérification également si d'autres dits documents ont été ajoutés, ladite phase d'acquisition ultérieure étant réalisée d'autres dits documents ont été ajoutés.

6. Procédure selon l'une quelconque des revendications précédentes, comprenant l'envoi d'un signal d'alerte audit utilisateur chaque fois que ladite phase d'acquisition ultérieure est effectuée.

7. Procédure selon l'une quelconque des revendications précédentes, dans laquelle ladite base de données externes comprend lesdits documents disponibles sur un réseau Internet.

8. Système autonome pour la gestion et la mise à jour de documents textuels numériques normatifs comprenant des moyens implémentant une procédure selon l'une quelconque des revendications précédentes.

9. Programme informatique comprenant des instructions qui, lorsque le programme est exécuté par un ordinateur, permettent à l'ordinateur d'exécuter une procédure selon l'une quelconque des revendications 1 à 7.

10. Support de stockage lisible par ordinateur comprenant des instructions qui, lorsqu'elles sont exécutées par un ordinateur, permettent audit ordinateur d'exécuter une procédure selon l'une quelconque des revendications 1 à 7.
